# EUROPEAN PATENT SPECIFICATION

(11) **EP 3 722 838 B1**
(45) Date of publication and mention of the grant of the patent: **13.09.2023**
(21) Application number: 19180063.0
(22) Date of filing: 13.06.2019
(51) Int. Cl.: G01V 1/22, G01V 1/24, G01V 1/26

(54) **DEVICE AND METHOD FOR UNINTERRUPTED RECORDING OF MULTI-CHANNEL SEISMIC DATA**
VORRICHTUNG UND VERFAHREN ZUR UNTERBRECHUNGSFREIEN AUFZEICHNUNG VON MEHRKANALIGEN SEISMISCHEN DATEN
DISPOSITIF ET PROCÉDÉ D'ENREGISTREMENT ININTERROMPU DE DONNÉES SISMIQUES MULTICANAUX

(30) Priority: 11.04.2019 CN 201910287687
(43) Date of publication of application: 14.10.2020
(73) Proprietor: First Institute of Oceanography, Ministry of Natural Resources, Qingdao City 266061 (CN)
(72) Inventor: PEI, Yanliang, Qingdao City 266061 (CN); LIU, Baohua, Qingdao City 266061 (CN); LI, Xishuang, Qingdao City 266061 (CN); KAN, Guangming, Qingdao City 266061 (CN); LIU, Chenguang, Qingdao City 266061 (CN); LIAN, Yanhong, Qingdao City 266061 (CN); LV, Bin, Qingdao City 266061 (CN)
(74) Representative: Canzler & Bergmeier Patentanwälte Partnerschaft mbB

(56) References cited:
- US-A- 5 200 930
- US-A1- 2010 157 728
- US-A1- 2018 100 939
- CHRISTIE P ET AL: "Raising the standards of seismic data quality", OILFIELD REVIEW, ELSEVIER, AMSTERDAM, NL, 1 January 2001 (2001-01-01), pages 16-31, XP002544169, ISSN: 0923-1730

## Description

### TECHNICAL FIELD

The present invention relates to the field of seismic detection, and in particular to a device and method for uninterrupted recording of multi-channel seismic data.

### BACKGROUND

Reflective seismic exploration is the most widely used method in geophysical exploration, and has important applications in the fields of oil and gas resource exploration and earth science research and the like. Marine seismic exploration originated from terrestrial seismic exploration. During the marine seismic operation, a marine seismic system device is installed on a research vessel. Marine-specific seismic sources and acquisition streamers are used to stimulate and receive seismic waves during research vessel navigation. Marine seismic exploration has moved from near-shore shallow water to high-sea deep water, and seismic exploration targets have become increasingly complex and refined, which has led to an increase in current seismic data acquisition costs. How to solve the ever-growing exploration cost problem has become one of the research hotspots in the field of seismic acquisition currently.

Beasley et al. (1998) proposed a simultaneous multi-source excitation method, using two seismic sources located at different spatial locations to simultaneously excite, and overlapping seismic signals of the two seismic sources can be separated by a post-processing method, which can improve the seismic data information amount. Berkhout (2008) proposed to upgrade a time zero overlap-excited seismic operation mode to an overlap-excited operation mode, and proposed a hybrid source seismic acquisition method, which can be used for simultaneous excitation by using seismic sources of different types and different dominant frequencies, thereby further improving the seismic data information amount.

For the time zero overlap-excited seismic operation mode, the trigger time of each shot of the seismic source is strictly corresponding to the recording start time of a seismic data file recording this shot by an acquisition device, and the acquisition start time is generally later than the source trigger time. The delay time is called the recording delay time Tdelay. Certainly, Tdelay may also be equal to 0. For the time zero overlap-excited seismic operation mode, each shot of the seismic source corresponds to only one recording file, which reduces the storage space.

The overlap-excited operation mode can be applied not only to multi-source hybrid seismic acquisition operations, but also to single-source acquisition operations; the overlap-excited seismic acquisition method puts forward higher requirements on a receiving recording system, requiring the receiving recording system to continuously acquire, transmit and recording files without interruption. In the overlap-excited seismic acquisition method, the receiving recording system continuously acquires, transmits, and records files, and it is impossible to record only one file from the start of acquisition to the end of the acquisition, which is unsafe and impractical. Therefore, the receiving recording system records an original seismic file according to a fixed file length, for example, records one file every 10 s; the excitation shots of the seismic source are no longer in one-to-one correspondence, and one seismic recording file may store data of one or more shots. How to match the shot excitation point with the seismic record becomes a problem that must be considered.

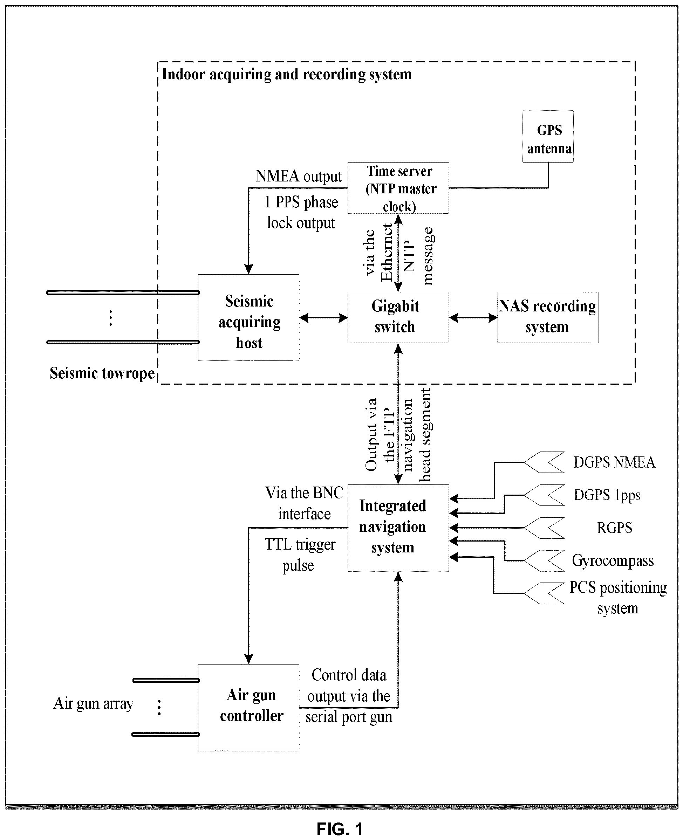

In order to solve this problem, the existing uninterrupted seismic acquisition operation uses integrated navigation software to generate a trigger pulse, and the trigger pulse directly triggers the shot of the seismic source. As shown in FIG. 1, an integrated navigation system receives a differential global positioning system (DGPS) signal and a 1 pps timing pulse, so that the time of the integrated navigation system is accurately synchronized to the UTC; the integrated navigation system records the accurate time of each shot, and this time is usually recorded in a data file called a "navigation head segment". This time uses the exact UTC, with the time accuracy being generally at the microsecond level.

A seismic acquiring and recording system also receives the DGPS signal and the 1 pps timing pulse, so that the time of the seismic acquiring and recording system is also accurately synchronized to the universal time coordinated (UTC), and an original seismic recording file with a fixed file length and uninterrupted recording also uses accurate UTC, with the time accuracy being generally at the microsecond level.

In this way, since the data file referred to as the "navigation head segment" recording the shot time and the original seismic recording file with a fixed file length and uninterrupted recording use a unified UTC system, a shot time-synchronized multi-channel seismic file is regenerated at the time of post-processing.

U.S. Patent No. US 5200930 A discloses a two-wire, multi-channel communication system capable of handling the high throughput necessary for effective communication between a central controller aboard a tow vessel and the many sensors deployed along the streamer. The central controller includes an intelligent modem with the capability of transmitting and receiving frequency-modulated message signals on one or more signal lines, such as conventional twisted-pair wires, over a number of individual inbound and outbound frequency channels. In the preferred embodiment, seventeen channels are spread over a frequency band ranging from about 20 kHz to 100 kHz, thereby making available for communication a bandwidth much wider than available in conventional single-channel streamer communication.

In this way, many positioning sensors, such as compasses, depth sensors, cable-leveling birds, and acoustic-ranging transceivers, attached to the streamer and each having a transmitter and receiver tuned to one of the modem's inbound and outbound channels, respectively, can be put in communication with the modem. To take advantage of its high throughput capability, the intelligent modem refers to a stored table of individual sensor parameters, such as sensor type, transmit channel, and receive channel, to schedule an efficient scan of the sensors. As a diagnostic tool, the communication system also monitors the quality and performance of the communication link by measuring and recording such parameters as the transmitted and received signal strengths, signal-to-noise ratios, and number of incorrectly received messages.

U.S. Patent Application Publication No.US 2018/0100939 A1 discloses a system for performing seismic surveys may include devices to attach fiber-optic cables and/or sensors to existing subsea infrastructure, as well as devices for recording seismic data at the fiber-optic cables/sensors attached to or incorporated within existing infrastructure. A method for seismic imaging of a subsurface volume of interest may include recording seismic data using fiber-optic cables attached to existing subsea infrastructure, processing the seismic data to create processed seismic data, and generating seismic images/attributes of the subsurface volume of interest from the processed seismic data. Additionally, the invention includes a one-way ranging technique to determine the location of FO cables using an integrated dynamic monitoring system and FO cables/sensors. The methods may be executed by a computer system.

However, when this method is used, there will be the following drawbacks:
a) The integrated navigation system and the seismic acquiring and recording system must be synchronized to the precise UTC. The deviation of the time synchronization of any one system will result in the uninterrupted recorded data being invalidated, and the operation risk is high and the cost is high. In order to carry out time synchronization of the UTC, there is a need for the support of a GPS positioning and timing system, which is easily handled for sea surface seismic exploration, but is difficult for a seismic exploration device town on the seabed because there is no GPS signal on the seabed. The solution is to convert the received GPS timing signal (1 pps timing second pulse) into an optical signal on the sea surface, transmit the optical signal to the seabed several kilometers deep (via an optical fiber), and convert the optical signal into a GPS timing signal at a seabed device. However, the conversion cost is high and the transmission accuracy is low.
b) Due to the dependence on the "navigation head segment", if a "navigation head segment" transmission failure occurs during real-time processing, improper handling will result in data loss.
c) There must be a professional integrated navigation system to provide a trigger pulse for the seismic source, but the integrated navigation system has high hardware costs.
d) The method is not suitable for deep tow seismic systems. An overall device of the deep tow seismic system performs towing operation near the seabed, and a professional integrated navigation device is bulky and cannot be integrated into the deep tow seismic system.

### SUMMARY

An objective of the present invention is to provide a device and method for uninterrupted recording of multi-channel seismic data, which can solve the problems that an existing uninterrupted seismic acquiring method has high conversion cost and low transmission precision, and easily causes data loss.

To achieve the above purpose, the present invention provides the following technical solutions.

In one aspect, the present invention provides a device for uninterrupted recording of multi-channel seismic data according to claim 1.

Optionally, the optical fiber transceiver is used for conversion between gigabit network data and optic fiber data.

Optionally, the network switch is a gigabit switch; and the gigabit switch is used for expansion of a network port of the optical fiber transceiver.

In another aspect, the present invention provides a method for uninterrupted recording of multi-channel seismic data according to claim 4.

Optionally, after the determining a current seismic data point of the shot moment according to the seismic data point and the shot moment, and adding a seismic data record to a shot time file, the method further includes:
arranging and packaging the seismic data by a random processor of the system on chip to determine the packaged seismic data; and
inputting the packaged seismic data to the network switch, and inputting the packaged seismic data to the hard disk by the network switch through the hard disk control module.

According to specific embodiments provided by the present invention, the present invention discloses the following technical effects: the present invention provides a device and method for uninterrupted recording of multi-channel seismic data. A shot time file is generated through the device for uninterrupted recording of multi-channel seismic data provided by the present invention. The shot time file includes a plurality of seismic data records, and the seismic data record includes a shot number, a current seismic file name, and a point number of a current seismic data point; the shot time file is a file that records shot time (source excitation time and source excitation moment); and the shot time may be UTC (in the presence of GPS timing) or relative time. The time recorded in the present invention is the point number of the current seismic data point; since the calculation of the source excitation moment and data storage are completed by an operating control center, as long as the sampling point number of the recording file at the excitation moment is accurately recorded, the shot time-synchronized file can also be generated and subsequent data processing work can be done, without accurate absolute UTC, so that there will be no loss of uninterruptedly recorded data, and there will be no problems of high operation risk and high cost, thereby improving the transmission efficiency.

In addition, the present invention does not need to adopt a professional integrated navigation system to provide a trigger pulse for a seismic source. Only at the time of the source excitation, the operating control center outputs a trigger signal to a high-voltage pulse source for source excitation, thereby reducing the hardware cost.

### BRIEF DESCRIPTION OF THE DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
- **FIG. 1**: is a block diagram of a marine multi-channel seismic exploration system that implements an uninterrupted recording function in the prior art;
- **FIG. 2**: is a schematic structural diagram of a device for uninterrupted recording of multi-channel seismic data provided by the present invention;
- **FIG. 3**: is a flowchart of implementing trigger recording provided by the present invention;
- **FIG. 4**: is a flowchart of implementing interrupted recording provided by the present invention;
- **FIG. 5**: is a flowchart of transmission of multi-channel seismic data provided by the present invention;
- **FIG. 6**: is a flowchart of transmission of navigation data of the National Marine Electronics Association (NMEA) provided by the present invention;
- **FIG. 7**: is a schematic diagram of an original file and a shot time regenerated file generated in an interrupted recording mode provided by the present invention; where FIG. 7(a) is a schematic diagram of continuity verification of the original file provided by the present invention; FIG. 7(b) is a schematic diagram of a shot time-synchronized regenerated file provided by the present invention; and
- **FIG. 8**: is a flowchart of transmission of a method for uninterrupted recording of multi-channel seismic data provided by the present invention.

### DETAILED DESCRIPTION OF EMBODIMENTS

The following clearly and completely describes the technical solutions in the embodiments of the present invention with reference to the accompanying drawings in the embodiments of the present invention.

An objective of the present invention is to provide a device and method for uninterrupted recording of multi-channel seismic data, which can solve the problems that an existing uninterrupted seismic acquiring method has high conversion cost and low transmission precision, and easily causes data loss.

To make the foregoing objective, features, and advantages of the present invention clearer and more comprehensible, the present invention is further described in detail below with reference to the accompanying drawings and specific embodiments.

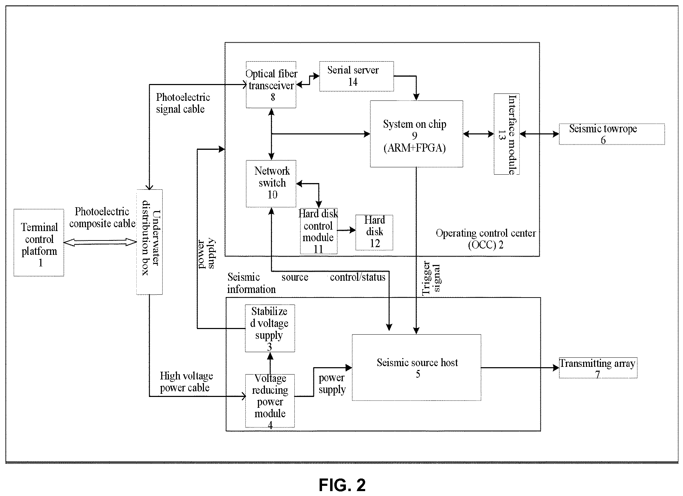

FIG. 2 is a schematic structural diagram of a device for uninterrupted recording of multi-channel seismic data provided by the present invention. As shown in FIG. 2, the device for uninterrupted recording of multi-channel seismic data includes: a terminal control platform 1, an operating control center 2, a stabilized voltage supply 3, a voltage reducing power module 4, a seismic source 5, seismic streamers 6, and a transmitting array 7; the operating control center 2 includes an optical fiber transceiver 8, a system on chip 9, a network switch 10, a hard disk control module 11, a hard disk 12, and an interface module 13; the optical fiber transceiver 8 is respectively connected with the network switch 10, a serial server 14 and the system on chip 9; the network switch 10 is further connected with the hard disk control module 11; the hard disk control module 11 is used for controlling reading and writing of the hard disk 12; the hard disk 12 is used for storing seismic data and a shot time file; the interface module 13 is respectively connected with the system on chip 9 and the seismic streamer 6; the terminal control platform 1 is respectively connected with the optical fiber transceiver 8 and the voltage reducing power module through an underwater distribution box; the voltage reducing power module is further connected with the stabilized voltage supply 3 and the seismic source 5; the stabilized voltage supply 3 is used for supplying power to the operating control center 2; the seismic source 5 is respectively connected with the network switch 10, the system on chip 9 and the transmitting array 7; in a trigger acquisition mode, when a source excitation moment is reached, a plurality of the seismic streamers 6 start the acquisition of seismic data, and the seismic data is uploaded to the operating control center 2; the operating control center 2 arranges and records the seismic data to the hard disk 12, and at the same time, a seismic data record is added to the shot time file; the seismic data record includes a shot number, a current seismic file name, and a point number of a current seismic data point; in an uninterrupted recording mode, the operating control center 2 causes the seismic streamers 6 to be always in an acquisition state and an uploading state, and the operating control center 2 arranges all received seismic data and stores the seismic data according to a preset time length; at the source excitation moment, the operating control center 2 outputs a trigger signal to a high-voltage pulse source for source excitation, and at the same time, a seismic data record is added to the shot time file.

The trigger signal includes, but is not limited to, a transistor-transistor logic (TTL) pulse, a close signal, or the like.

In practical application, the system on chip 9 specifically includes: an ARM processor and a field-programmable gate array (FPGA); the system on chip 9 is a core control unit of the operating control center 2; the ARM processor is configured to package multi-channel seismic data, parse positioning data, and record a shot time file; and the FPGA is configured to receive seismic data on the seismic streamer 6 and generate a shot trigger signal.

The optical fiber transceiver 8 is used for conversion between gigabit network data and optic fiber data.

The network switch 10 is a gigabit switch; and the gigabit switch is used for expansion of a network port of the optical fiber transceiver 8.

Higher-resolution and especially lateral-resolution ocean seismic data can be obtained by towing a seismic source and a receiving streamer near the seabed instead of just towing beneath the surface of the sea.

A main device of the deep tow seismic system is located underwater, and the operating control center (OCC) 2 is a highly integrated acquisition, recording and control center, which realizes functions of an indoor multi-channel acquiring and recording system and an integrated navigation system in FIG. 1.

In the structure of the OCC 2, the system on chip 9 composed of the ARM processor and the FPGA is a core control unit of the OCC 2; a main function of the FPGA is to receive seismic data uploaded by the seismic streamer 6, and receive positioning data transmitted from the indoor terminal control platform 1 to generate a shot trigger signal and the like; ARM is mainly responsible for encapsulating multi-channel seismic data, parsing positioning data, and writing a shot time file; and the optical fiber transceiver 8 is used for conversion between gigabit network data and optic fiber data. The network switch 10 is used for expansion of a network port of the optical fiber transceiver 8. The serial server is used for data transmission of RS232 serial data such as positioning data. The hard disk control module 11 is used for reading and writing control of the hard disk 12, and the hard disk 12 is used for storing seismic data and a shot time file.

The terminal control platform 1 communicates with an underwater part through an optical fiber link, and is specifically composed of an integrated monitoring host, a source monitoring host, an optical fiber transceiver, a network switch, a serial server, a positioning system, and the like, and these devices are mainly used for setting and monitoring of an underwater device; the positioning system may be GPS or Beidou, for providing positioning data for the underwater device.

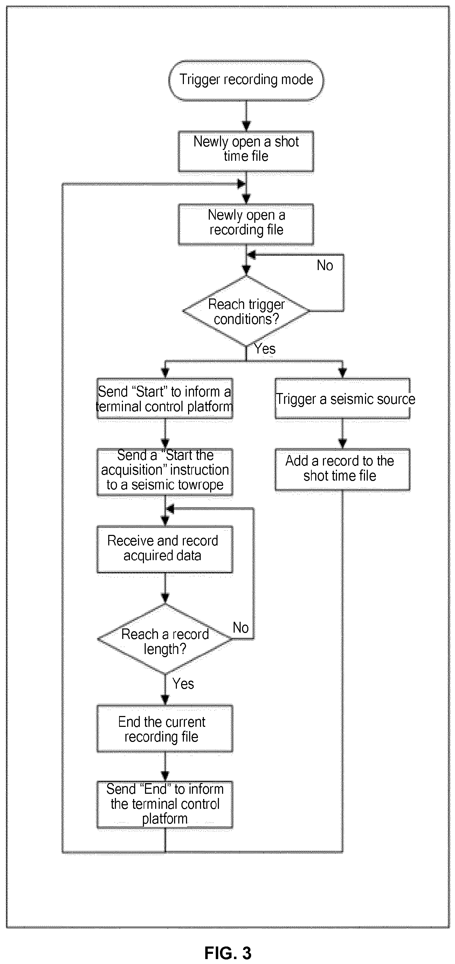

FIG. 3 is a flowchart of implementing trigger recording provided by the present invention. As shown in FIG. 3, in a trigger acquisition mode, when a source excitation moment is reached, a plurality of seismic streamers 6 are commanded to start acquisition, the data is uploaded to the OCC, the OCC arranges and records the data to the data storage hard disk 12, and at the same time, a seismic data record is added to a shot time file to record a shot number and an original file name.

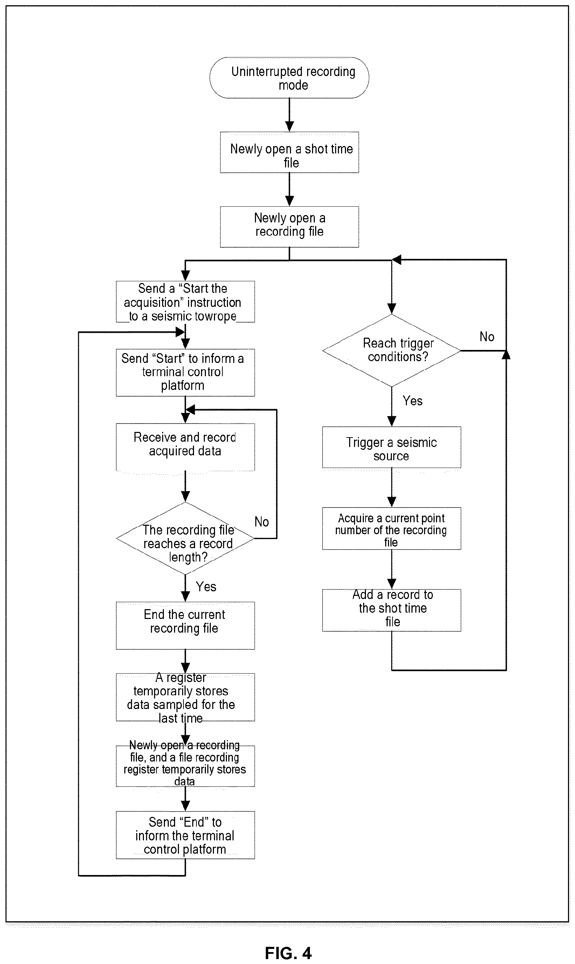

FIG. 4 is a flowchart of implementing interrupted recording provided by the present invention. As shown in FIG. 4, in an uninterrupted recording mode, the OCC commands the streamer to be always in a state of acquisition and data uploading, and the OCC arranges all received seismic data and then stores the seismic data according to a certain time length (for example, 3 seconds); at the source excitation moment, the OCC outputs a trigger signal to a high-voltage pulse source for source excitation, and at the same time, a seismic data record is added to the shot time file; and besides the shot number and the original file name, the most important point is to record a file sampling point number at the current moment. Since the calculation of the source excitation moment and data storage are completed by an OCC, as long as the sampling point number of the recording file at the excitation moment is accurately recorded, the shot time-synchronized file can also be generated and subsequent data processing work can be done, without accurate absolute UTC.

In order to achieve accurate recording of the sampling point number at the excitation moment, the FPGA of the OCC receives multi-channel seismic data uploaded by a data transfer unit (DTU), writes an excitation flag bit for each data point, and sends the excitation flag bit to the ARM for arrangement and packaging. The FPGA calculates a shot excitation moment according to the RMC analysis result, and outputs a trigger signal at the corresponding shot moment to control deep tow source excitation, and marks a position bit for the excitation of a current seismic data point; where the shot moment is the moment of the seismic source excitation shot.

In an uninterrupted acquisition mode, the ARM checks the excitation flag bit of the data point. When the flag bit is detected as "1", the current data point number is written into the shot time file to achieve accurate recording of the data point number at the excitation moment.

The uninterrupted acquisition mode includes continuous acquisition and trigger acquisition, which are two operation modes used in seismic operations.

In the trigger acquisition mode, the seismic source is excited once, and an acquisition system records a file. For example, if a record length set by a user is 1100 milliseconds, the recording starts from the source excitation moment, and the seismic data of 1100 milliseconds is recorded, and the recording is stopped after the 1100 millimeters. Once the seismic source is excited again, another file is recorded and the operations are repeated.

In the trigger acquisition mode, if the file record length is set to 1100 milliseconds, after the seismic source is excited once, wait for at least 1100 milliseconds before the next shot is excited; and if the acquisition system has not recorded the data of 1100 milliseconds, the seismic source cannot excite the next shot again.

In the continuous acquisition mode, there is no restriction by the above 1100 milliseconds of recorded data. In the continuous acquisition mode, the acquisition system is always recording data, and the shot can be performed randomly, free from time limit. That is, the interval between the source shots can be very dense, and may be 500, 1000, or 1500 milliseconds, completely independent of the restriction by the acquisition system. The denser the shot, the higher the spatial sampling rate, and the higher the lateral resolution (also called the horizontal resolution).

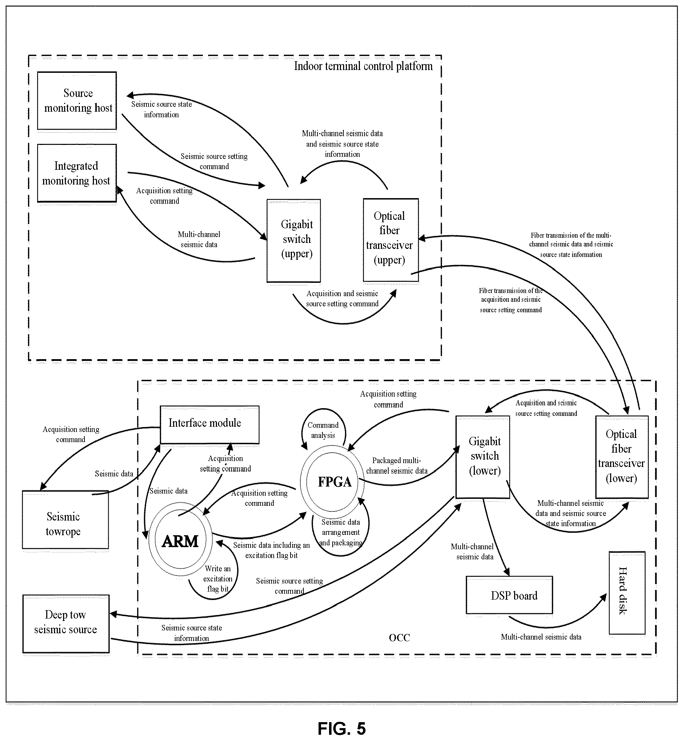

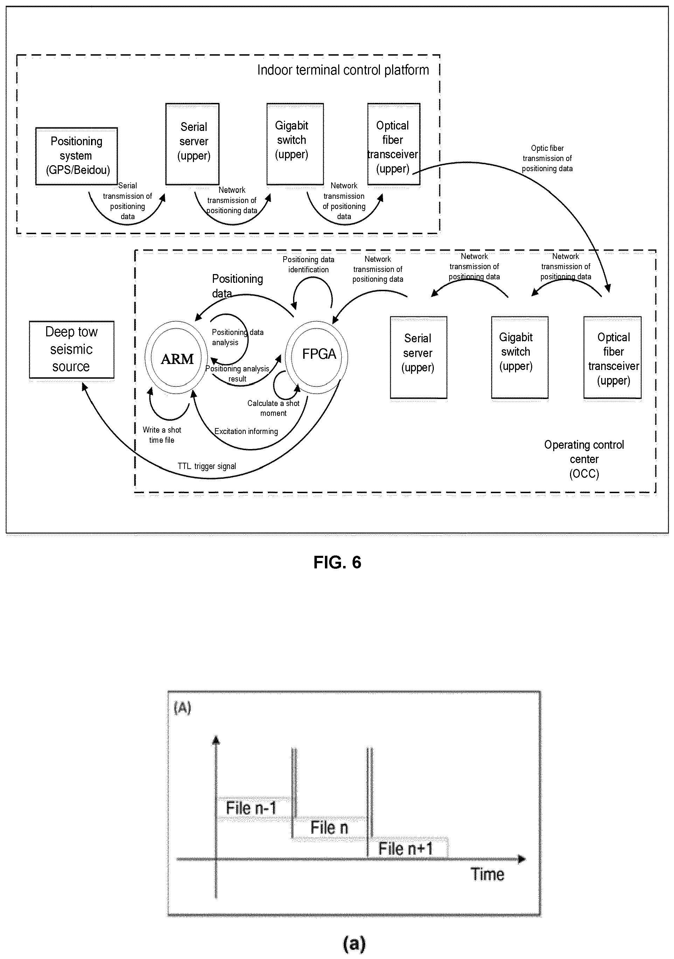

An upload channel includes multi-channel seismic data, source charge and discharge status, tow depth and height information, and the like. A download channel includes acquisition, source setting commands, positioning system NMEA data, and the like. The specific data flowchart is shown in FIGs. 5 and 6.

FIG. 5 is a flowchart of transmission of multi-channel seismic data provided by the present invention. As shown in FIG. 5, multi-channel seismic data acquired by a four-channel field digitizer unit (FDU) is acquired by the DTU and then uploaded to the OCC, that is, the multi-channel seismic data acquired by the seismic streamer is uploaded to the OCC; after receiving the DTU data, the FPGA inside the OCC fills in the excitation flag bit for each sampling point, and then the data is transmitted to the ARM processor through an Advanced eXtensible Interface (AXI) bus.

The ARM processor is responsible for arranging and packaging seismic data and outputting the seismic data to a Gigabit network port. The network data is divided into multiple channels through the network switch 10. One channel is connected to the indoor terminal control platform 1 through the optical fiber transceiver 8 and a photoelectric composite cable, and one channel is connected to a controller of the DSP hard disk 12 for local data storage; an acquisition setting command of an indoor integrated monitoring host is transmitted to the ARM processor via an optical fiber, and the ARM command is parsed and then transparently transmitted by the FPGA to the DTU.

FIG. 6 is a flowchart of transmission of navigation data of the National Marine Electronics Association (NMEA) provided by the present invention. NMEA is the unified RTCM standard protocol for GPS navigation devices; NMEA has become the most common data output format for all GPS receivers, and is also used in most software packages that interface with a GPS receiver. As shown in FIG. 6, positioning data of an indoor positioning system is output via an RS232 serial port, integrated into the Gigabit network through a serial server, and transmitted by a photoelectric composite cable data to an underwater device. After reaching the underwater device, the positioning data is converted back to the RS232 serial port by the paired serial server and output to the FPGA of the OCC.

After the FPGA recognizes the positioning information, the positioning data is sent to the ARM for analysis; the FPGA calculates source excitation moments according to a trigger setting parameter (shot interval) and the navigation data analysis result; at each excitation moment, the FPGA sends a trigger signal to the seismic source and the ARM on the one hand, and fills in the excitation flag bit for multi-channel seismic data sampling points coming at this moment.

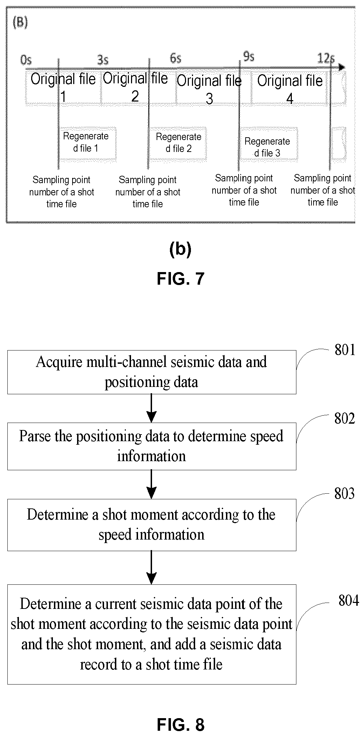

As shown in FIG. 7(a), in the uninterrupted recording mode, in order to detect whether the recording is truly continuous without any interruption, there is an overlap of sampling points between each original recording file (n) generated by the system and two adjacent original recording files (n-1 and n+1).

As shown in FIG. 7(b), when uninterruptedly recorded seismic data is processed, the uninterruptedly recorded data file can be preprocessed according to shot time file information (shot time, a shot number, a data point number, and the like), and converted to generate a multi-channel seismic data regenerated file synchronized with the source excitation.

It can be seen from FIG. 7 that the sampling point number is given by the shot time file, and is the basis for regeneration of the shot time-synchronized file and subsequent data processing. The device and method for uninterrupted recording of multi-channel seismic data provided by the present invention can ensure that the shot time-synchronized file is regenerated correctly.

FIG. 8 is a flowchart of transmission of a method for uninterrupted recording of multi-channel seismic data provided by the present invention. As shown in FIG. 8, a method for uninterrupted recording of multi-channel seismic data includes:
Step 801: acquire multi-channel seismic data and positioning data; where each channel of the seismic data includes a plurality of seismic data points.
Step 802: parse the positioning data to determine speed information.
Step 803: determine a shot moment according to the speed information.
Step 804: determine a current seismic data point of the shot moment according to the seismic data point and the shot moment, and add a seismic data record to a shot time file; where the seismic data record includes a shot number, a current seismic file name, and a point number of the current seismic data point.
Step 804 specifically includes: setting an excitation flag bit of each of the seismic data points to "0"; when the shot moment is reached, outputting a TTL trigger pulse signal, and setting the excitation flag bit of the seismic data point reaching the shot moment to "1"; determining whether the excitation flag bit of the seismic data point is "1"; and if yes, determining the current seismic data point of the shot moment and adding a seismic data record to the shot time file.

After the step 804, the method further includes: arranging and packaging the seismic data by a random processor of the system on chip 9 to determine the packaged seismic data; and inputting the packaged seismic data to the network switch 10, and inputting the packaged seismic data to the hard disk 12 by the network switch 10 through the hard disk control module 11.

The present invention provides the device and method for uninterrupted recording of multi-channel seismic data suitable for deep tow work characteristics; the FPGA calculates a source excitation moment according to a distance-determination trigger setting parameter and the navigation information analysis result; at each excitation moment: on the one hand, a trigger signal is sent to a seismic source, so that the seismic source is excited; on the other hand, the ARM is informed that the shot for excitation has been performed; finally, fill in special flag bits for multi-channel seismic data sampling points coming at this moment (for example, the writing "1" for the excitation moment, and writing "0" for others).

The ARM in the OCC checks the excitation flag bit of the data point. When the flag bit is detected as "1", the current data point number is written into the shot time file to achieve accurate recording of the data point number at the excitation moment.

The device and method for uninterrupted recording of multi-channel seismic data provided by the present invention can not only achieve uninterrupted recording, but also achieve conventional trigger recording, and can also be used for a deep tow seismic system and a conventional sea surface tow seismic system.

The present invention does not rely on a professional integrated navigation system and does not rely on the 1 PPS timing pulse, and achieves continuous acquisition and uninterrupted recording, thereby improving the acquisition efficiency.

Since the present invention does not rely on the professional integrated navigation system, the hardware cost is reduced; the portability of the system is improved; the data scrapping caused by the transmission failure of the "navigation head segment" is avoided, and the system reliability is high.

Since the present invention does not rely on the 1 PPS timing pulse, invalid uninterruptedly-recorded data caused by the failure of a 1 PPS timing pulse path is avoided, and thus the system reliability is high.

Each embodiment of the present specification is described in a progressive manner, each embodiment focuses on the difference from other embodiments, and the same and similar parts between the embodiments may refer to each other. For a system disclosed in the embodiments, since it corresponds to the method disclosed in the embodiments, the description is relatively simple, and reference can be made to the method description.

Several examples are used for illustration of the principles and implementation methods of the present invention. The description of the embodiments is used to help illustrate the method and its core principles of the present invention.

## Claims

1. A device for uninterrupted recording of multi-channel seismic data, **characterized in** comprising a terminal control platform (1), an operating control center, OCC (2), a stabilized voltage supply (3), a voltage reducing power module (4), a seismic source (5), seismic streamers (6), and a transmitting array (7);
wherein the operating control center (2) comprises an optical fiber transceiver (8), a system on chip (9), a network switch (10), a serial server (14), a hard disk control module (11), a hard disk (12), and an interface module (13); the optical fiber transceiver (8) is respectively connected with the network switch (10), the serial server (14) and the system on chip (9); the network switch (10) is further connected with the hard disk control module (11); the hard disk control module (11) is configured for controlling reading and writing of the hard disk (12); the hard disk (12) is configured for storing seismic data and a shot time file; the interface module (13) is respectively connected with the system on chip (9) and the seismic streamer (6);
the terminal control platform (1) is respectively connected with the optical fiber transceiver (8) and the voltage reducing power module (4) through an underwater distribution box; the voltage reducing power module (4) is further connected with the stabilized voltage supply (3) and the seismic source (5); the stabilized voltage supply (3) is configured for supplying power to the operating control center (2);
the seismic source (5) is respectively connected with the network switch (10), the system on chip (9) and the transmitting array (7);
the system on chip (9) specifically comprises: an ARM processor and a field-programmable gate array, FPGA;
the system on chip (9) is a core control unit of the operating control center (2);
the ARM processor is configured to package multi-channel seismic data, parse positioning data to determine speed information, and record a shot time file; and
the FPGA is configured to receive seismic data on the seismic streamer (6) and receive the positioning data transmitted from the terminal control platform (1) to generate a shot trigger signal; wherein the positioning data is sent to the ARM for analysis;
in a trigger acquisition mode, when a source excitation moment is reached, a plurality of the seismic streamers (6) are configured to start the acquisition of seismic data, and the seismic data is uploaded to the operating control center (2); the operating control center (2) is configured to arrange and record the seismic data to the hard disk (12), and at the same time, a seismic data record is added to the shot time file; the seismic data record comprises a shot number, a current seismic file name, and a point number of a current seismic data point;
in an uninterrupted recording mode, the operating control center (2) is further configured to cause the seismic streamers (6) to be always in an acquisition state and an uploading state, and the operating control center (2) is further configured to arrange all received seismic data and store the seismic data according to a preset time length; at the source excitation moment, the operating control center (2) is further configured to output a trigger signal to a high-voltage pulse source for source excitation, and at the same time, a seismic data record is added to the shot time file;
in order to achieve accurate recording of the sampling point number at the excitation moment, the FPGA of the OCC is configured to receive multi-channel seismic data uploaded by a data transfer unit, write an excitation flag bit for each data point, and send the excitation flag bit to the ARM for arrangement and packaging; the FPGA is further configured to calculate a shot excitation moment according to the ARM analysis result as the speed information, and output a trigger signal at the corresponding shot moment to control deep tow seismic
source excitation, and mark a position bit for the excitation of a current seismic data point; where the shot moment is the moment of the seismic source excitation shot;
in an uninterrupted acquisition mode, the ARM is configured to check the excitation flag bit of the data point; when the flag bit is detected as "1", the current data point number is written into the shot time file to achieve accurate recording of the data point number at the excitation moment.

2. The device for uninterrupted recording of multi-channel seismic data according to claim 1, wherein the optical fiber transceiver (8) is configured for conversion between gigabit network data and optic fiber data.

3. The device for uninterrupted recording of multi-channel seismic data according to claim 1, wherein the network switch (10) is a gigabit switch; and the gigabit switch is configured for expansion of a network port of the optical fiber transceiver (8).

4. A method for uninterrupted recording of multi-channel seismic data, **characterized in that** the recording method is applied to a device for uninterrupted recording of multi-channel seismic data, which comprises a terminal control platform (1), an operating control center (2), a stabilized voltage supply (3), a voltage reducing power module (4), a seismic source (5), seismic streamers (6), and a transmitting array (7); the operating control center (2) comprises an optical fiber transceiver (8), a system on chip (9), a network switch (10), a serial server (14), a hard disk control module (11), a hard disk (12), and an interface module (13); the optical fiber transceiver (8) is respectively connected with the network switch (10), the serial server (14) and the system on chip (9); the network switch (10) is further connected with the hard disk control module (11); the hard disk control module (11) is configured for controlling reading and writing of the hard disk (12); the hard disk (12) is configured for storing seismic data and a shot time file; the interface module (13) is respectively connected with the system on chip (9) and the seismic streamer (6); the terminal control platform (1) is respectively connected with the optical fiber transceiver (8) and the voltage reducing power module (4) through an underwater distribution box; the voltage reducing power module (4) is further connected with the stabilized voltage supply (3) and the seismic source (5); the stabilized voltage supply (3) is configured for supplying power to the operating control center (2); the seismic source (5) is respectively connected with the network switch (10), the system on chip (9) and the transmitting array (7); the system on chip (9) is a core control unit of the operating control center (2); the ARM processor is configured to package multi-channel seismic data, parse positioning data to determine speed information, and record a shot time file; and the FPGA is configured to receive seismic data on the seismic streamer (6) and receive the positioning data transmitted from the terminal control platform (1) to generate a shot trigger signal; wherein the positioning data is sent to the ARM for analysis; and
the recording method comprises:
acquiring multi-channel seismic data and positioning data; wherein each channel of the seismic data comprises a plurality of seismic data points;
parsing the positioning data to determine speed information;
determining a shot moment according to the speed information; and
determining a current seismic data point of the shot moment according to the seismic data point and the shot moment, and adding a seismic data record to a shot time file; wherein the seismic data record comprises a shot number, a current seismic file name, and a point number of the current seismic data point;
wherein the determining a current seismic data point of the shot moment according to the seismic data point and the shot moment, and adding a seismic data record to a shot time file specifically comprises:
setting an excitation flag bit of each of the seismic data points to "0";
when the shot moment is reached, outputting a transistor-transistor logic, TTL, trigger pulse signal, and setting the excitation flag bit of the seismic data point reaching the shot moment to "1";
determining whether the excitation flag bit of the seismic data point is "1" to obtain a first judging result; and
if the first judging result is expressed as that the excitation flag bit of the seismic data point is "1", determining the current seismic data point of the shot moment and adding a seismic data record to the shot time file.

5. The method for uninterrupted recording of multi-channel seismic data according to claim 4, wherein after the determining a current seismic data point of the shot moment according to the seismic data point and the shot moment, and adding a seismic data record to a shot time file, the method further comprises:
arranging and packaging the seismic data by a random processor of the system on chip (9) to determine the packaged seismic data; and
inputting the packaged seismic data to the network switch (10), and inputting the packaged seismic data to the hard disk (12) by the network switch (10) through the hard disk control module (11).

## Patentansprüche

1. Vorrichtung zum ununterbrochenen Aufzeichnen mehrkanaliger seismischer Daten, **dadurch gekennzeichnet, dass** sie eine Terminal-Steuerplattform (1), eine Betriebssteuerzentrale (OCC) (2), eine stabilisierte Spannungsversorgung (3), ein Spannung reduzierendes Versorgungsmodul (4), eine seismische Quelle (5), seismische Schleppmesskabel (6) und eine Sendeanordnung (7) umfasst;
wobei die Betriebssteuerzentrale (2) einen Lichtleitfaser-Transceiver (8), ein System-on-chip (9), einen Netzwerkswitch (10), einen seriellen Server (14), ein Festplatten-Steuermodul (11), eine Festplatte (12) und ein Schnittstellenmodul (13) umfasst; der Lichtleitfaser-Transceiver (8) jeweils mit dem Netzwerkswitch (10), dem seriellen Server (14) und dem System-on-chip (9) verbunden ist; der Netzwerkswitch (10) ferner mit dem Festplatten-Steuermodul (11) verbunden ist; das Festplatten-Steuermodul (11) zum Steuern des Lesens und Schreibens der Festplatte (12) ausgelegt ist; die Festplatte (12) zum Speichern von seismischen Daten und einer Schusszeitdatei ausgelegt ist; das Schnittstellenmodul (13) jeweils mit dem System-on-chip (9) und dem seismischen Schleppmesskabel (6) verbunden ist;
die Terminal-Steuerplattform (1) jeweils mit dem Lichtleitfaser-Transceiver (8) und dem Spannung reduzierenden Versorgungsmodul (4) über einen Unterwasser-Verteilerkasten verbunden ist; das Spannung reduzierende Versorgungsmodul (4) ferner mit der stabilisierten Spannungsversorgung (3) und der seismischen Quelle (5) verbunden ist; die stabilisierte Spannungsversorgung (3) ausgelegt ist zum Liefern von Leistung an die Betriebssteuerzentrale (2);
die seismische Quelle (5) jeweils mit dem Netzwerkswitch (10), dem System-on-chip (9) und der Sendeanordnung (7) verbunden ist;
das System-on-chip (9) genauer umfasst: einen ARM-Prozessor und ein feldprogrammierbares Gate-Array (FPGA);
das System-on-chip (9) eine Kernsteuereinheit der Betriebssteuerzentrale (2) ist;
der ARM-Prozessor ausgelegt ist, mehrkanalige seismische Daten zusammenzupacken, Positionierungsdaten zu parsen, um Geschwindigkeitsinformationen zu bestimmen, und eine Schusszeitdatei aufzuzeichnen; und
das FPGA ausgelegt ist, seismische Daten über das seismische Schleppmesskabel (6) zu empfangen und die von der Terminal-Steuerplattform (1) gesendeten Positionierungsdaten zu empfangen, um ein Schussauslösesignal zu erzeugen; wobei die Positionierungsdaten zur Analyse an den ARM gesendet werden;
in einem Auslöseerlangungsmodus, wenn ein Quellenerregungsmoment erreicht ist, eine Vielzahl der seismischen Schleppmesskabel (6) ausgelegt ist, die Erlangung der seismischen Daten zu starten, und die seismischen Daten in die Betriebssteuerzentrale (2) hochgeladen werden; die Betriebssteuerzentrale (2) ausgelegt ist, die seismischen Daten anzuordnen und auf der Festplatte (12) aufzuzeichnen, und gleichzeitig ein seismischer Dateneintrag der Schusszeitdatei hinzugefügt wird; wobei der seismische Dateneintrag eine Schussnummer, einen Namen der aktuellen seismischen Datei und eine Punktnummer eines aktuellen seismischen Datenpunkts umfasst;
in einem ununterbrochenen Aufzeichnungsmodus die Betriebssteuerzentrale (2) ferner ausgelegt ist, die seismischen Schleppmesskabel (6) zu veranlassen, immer in einem Erlangungszustand und einem Hochladezustand zu sein, und die Betriebssteuerzentrale (2) ferner ausgelegt ist, alle empfangenen seismischen Daten anzuordnen und die seismischen Daten gemäß einer voreingestellten Zeitlänge zu speichern; zum Quellenerregungsmoment die Betriebssteuerzentrale (2) ferner ausgelegt ist, ein Auslösesignal zu einer Hochspannungsimpulsquelle zur Quellenerregung auszugeben, und gleichzeitig ein seismischer Dateneintrag der Schusszeitdatei hinzugefügt wird;
um eine genaue Aufzeichnung der Abtastpunktnummer zum Erregungsmoment zu erzielen, das FPGA der OCC ausgelegt ist, durch eine Datenübertragungseinheit hochgeladene mehrkanalige seismische Daten zu empfangen, ein Erregungs-Flagbit für jeden Datenpunkt zu schreiben und das Erregungs-Flagbit an den ARM zum Anordnen und Zusammenpacken zu senden; das FPGA ferner ausgelegt ist, einen Schusserregungsmoment gemäß dem ARM-Analyseergebnis als die Geschwindigkeitsinformation zu berechnen und ein Auslösesignal zum entsprechenden Schussmoment auszugeben, um eine seismische Tiefschleppquellenerregung zu steuern, und ein Positionsbit für die Erregung eines aktuellen seismischen Datenpunkts zu markieren; wobei der Schussmoment der Moment des Erregungsschusses der seismischen Quelle ist;
in einem ununterbrochenen Erlangungsmodus der ARM ausgelegt ist, das Erregungs-Flagbit des Datenpunkts zu prüfen; wenn das Flagbit als "1" erfasst wird, die aktuelle Datenpunktnummer in die Schusszeitdatei geschrieben wird, um eine genaue Aufzeichnung der Datenpunktnummer zum Erregungsmoment zu erzielen.

2. Vorrichtung zum ununterbrochenen Aufzeichnen mehrkanaliger seismischer Daten nach Anspruch 1, wobei der Lichtleitfaser-Transceiver (8) ausgelegt ist zum Umwandeln zwischen Gigabit-Netzwerkdaten und Lichtleitfaserdaten.

3. Vorrichtung zum ununterbrochenen Aufzeichnen mehrkanaliger seismischer Daten nach Anspruch 1, wobei der Netzwerk-Switch (10) ein Gigabit-Switch ist; und der Gigabit-Switch ausgelegt ist zum Erweitern eines Netzwerkports des Lichtleitfaser-Transceivers (8).

4. Verfahren zum ununterbrochenen Aufzeichnen mehrkanaliger seismischer Daten, **dadurch gekennzeichnet, dass** das Aufzeichnungsverfahren angewendet wird bei einer Vorrichtung zum ununterbrochenen Aufzeichnen mehrkanaliger seismischer Daten, die eine Terminal-Steuerplattform (1), eine Betriebssteuerzentrale (2), eine stabilisierte Spannungsversorgung (3), ein Spannung reduzierendes Versorgungsmodul (4), eine seismische Quelle (5), seismische Schleppmesskabel (6) und eine Sendeanordnung (7) umfasst; die Betriebssteuerzentrale (2) einen Lichtleitfaser-Transceiver (8), ein System-on-chip (9), einen Netzwerkswitch (10), einen seriellen Server (14), ein Festplatten-Steuermodul (11), eine Festplatte (12) und ein Schnittstellenmodul (13) umfasst; der Lichtleitfaser-Transceiver (8) jeweils mit dem Netzwerkswitch (10), dem seriellen Server (14) und dem System-on-chip (9) verbunden ist; der Netzwerkswitch (10) ferner mit dem Festplatten-Steuermodul (11) verbunden ist; das Festplatten-Steuermodul (11) zum Steuern des Lesens und Schreibens der Festplatte (12) ausgelegt ist; die Festplatte (12) zum Speichern von seismischen Daten und einer Schusszeitdatei ausgelegt ist; das Schnittstellenmodul (13) jeweils mit dem System-on-chip (9) und dem seismischen Schleppmesskabel (6) verbunden ist; die Terminal-Steuerplattform (1) jeweils mit dem Lichtleitfaser-Transceiver (8) und dem Spannung reduzierenden Versorgungsmodul (4) über einen Unterwasser-Verteilerkasten verbunden ist; das Spannung reduzierende Versorgungsmodul (4) ferner mit der stabilisierten Spannungsversorgung (3) und der seismischen Quelle (5) verbunden ist; die stabilisierte Spannungsversorgung (3) ausgelegt ist zum Liefern von Leistung an die Betriebssteuerzentrale (2); die seismische Quelle (5) jeweils mit dem Netzwerkswitch (10), dem System-on-chip (9) und der Sendeanordnung (7) verbunden ist; das System-on-chip (9) eine Kernsteuereinheit der Betriebssteuerzentrale (2) ist; der ARM-Prozessor ausgelegt ist, mehrkanalige seismische Daten zusammenzupacken, Positionierungsdaten zu parsen, um Geschwindigkeitsinformationen zu bestimmen, und eine Schusszeitdatei aufzuzeichnen; und das FPGA ausgelegt ist, seismische Daten auf dem seismischen Schleppmesskabel (6) zu empfangen und die von der Terminal-Steuerplattform (1) gesendeten Positionierungsdaten zu empfangen, um ein Schussauslösesignal zu erzeugen; wobei die Positionierungsdaten zur Analyse zu dem ARM gesendet werden; und
das Aufzeichnungsverfahren umfasst:
Erlangen von mehrkanaligen seismischen Daten und Positionierungsdaten; wobei jeder Kanal der seismischen Daten eine Vielzahl von seismischen Datenpunkten umfasst;
Parsen der Positionierungsdaten, um Geschwindigkeitsinformationen zu bestimmen;
Bestimmen eines Schussmoments gemäß den Geschwindigkeitsinformationen; und
Bestimmen eines aktuellen seismischen Datenpunkts des Schussmoments gemäß dem seismischen Datenpunkt und dem Schussmoment und Hinzufügen eines seismischen Dateneintrags zu einer Schusszeitdatei; wobei der seismische Dateneintrag eine Schussnummer, einen Namen der aktuellen seismischen Datei und eine Punktnummer des aktuellen seismischen Datenpunkts umfasst;
wobei das Bestimmen eines aktuellen seismischen Datenpunkts des Schussmoments gemäß dem seismischen Datenpunkt und dem Schussmoment und Hinzufügen eines seismischen Dateneintrags zu einer Schusszeitdatei genauer umfassen:
Setzen eines Erregungsflagbits jedes der seismischen Datenpunkte auf "0";
wenn der Schussmoment erreicht ist, Ausgeben eines Auslöseimpulssignals in TTL-Logik (Transistor-Transistor-Logik) und Setzen des Erregungsflagbits des seismischen Datenpunkts, der den Schussmoment erreicht, auf "1";
Bestimmen, ob das Erregungsflagbit des seismischen Datenpunkts "1" ist, um ein erstes Beurteilungsergebnis zu erlangen; und
falls das Beurteilungsergebnis so ausgedrückt ist, dass das Erregungsflagbit des seismischen Datenpunkts "1" ist, Bestimmen des aktuellen seismischen Datenpunkts des Schussmoments und Hinzufügen eines seismischen Dateneintrags zu einer Schusszeitdatei.

5. Verfahren zum ununterbrochenen Aufzeichnen mehrkanaliger seismischer Daten nach Anspruch 4, wobei nach dem Bestimmen eines aktuellen seismischen Datenpunkts des Schussmoments gemäß dem seismischen Datenpunkt und dem Schussmoment und Hinzufügen eines seismischen Dateneintrags zu einer Schusszeitdatei das Verfahren ferner umfasst:
Anordnen und Zusammenpacken der seismischen Daten durch einen Zufallsprozessor des System-on-chips (9), um die zusammengepackten seismischen Daten zu bestimmen; und
Eingeben der zusammengepackten seismischen Daten in den Netzwerk-Switch (10) und Eingeben der zusammengepackten seismischen Daten in die Festplatte (12) durch den Netzwerk-Switch (10) über das Festplatten-Steuermodul (11).

## Revendications

1. Dispositif pour l'enregistrement ininterrompu de données sismiques multicanaux, **caractérisé en ce qu'**il comprend une plateforme de commande terminale (1), un centre de commande d'exploitation (OCC) (2), une alimentation en tension stabilisée (3), un module de puissance réducteur de tension (4), une source sismique (5), des flûtes sismiques (6) et un réseau d'émission (7) ;
dans lequel le centre de commande d'exploitation (2) comprend un émetteur-récepteur à fibres optiques (8), un système sur puce (9), un commutateur réseau (10), un serveur série (14), un module de commande de disque dur (11), un disque dur (12) et un module d'interface (13) ; l'émetteur-récepteur à fibres optiques (8) est connecté respectivement au commutateur réseau (10), au serveur série (14) et au système sur puce (9) ; le commutateur réseau (10) est en outre connecté au module de commande de disque dur (11) ; le commutateur de réseau (10) est en outre connecté au module de commande du disque dur (11) ; le module de commande de disque dur (11) est configuré pour commander la lecture et l'écriture par le disque dur (12) ; le disque dur (12) est configuré pour stocker des données sismiques et un fichier de temps de tir ; le module d'interface (13) est respectivement connecté au système sur puce (9) et à la flûte sismique (6) ;
la plateforme de commande terminale (1) est respectivement connectée à l'émetteur-récepteur à fibres optiques (8) et au module de puissance réducteur de tension (4) par l'intermédiaire d'une boîte de distribution sous-marine ; le module de puissance réducteur de tension (4) est en outre connecté à l'alimentation en tension stabilisée (3) et à la source sismique (5) ; l'alimentation en tension stabilisée (3) est configurée pour fournir de l'énergie au centre de commande d'exploitation (2) ;
la source sismique (5) est respectivement connectée au commutateur réseau (10), au système sur puce (9) et au réseau d'émission (7) ;
le système sur puce (9) comprend en particulier : un processeur ARM et un réseau de portes programmables (FPGA) ;
le système sur puce (9) est une unité de commande centrale du centre de commande d'exploitation (2) ;
le processeur ARM est configuré pour mettre en paquets des données sismiques multicanaux, analyser des données de positionnement afin de déterminer des informations de vitesse et enregistrer un fichier de temps de tir ; et
le FPGA est configuré pour recevoir des données sismiques sur la flûte sismique (6) et pour recevoir les données de positionnement transmises par la plateforme de commande terminale (1) afin de générer un signal de déclenchement de tir ; les données de positionnement étant envoyées à l'ARM pour analyse ;
dans un mode d'acquisition de déclenchement, lorsqu'un instant d'excitation de source est atteint, une pluralité des flûtes sismiques (6) sont configurées pour démarrer l'acquisition de données sismiques, et les données sismiques sont téléversées vers le centre de commande d'exploitation (2) ; le centre de commande d'exploitation (2) est configuré pour organiser et enregistrer les données sismiques sur le disque dur (12), et en même temps, un enregistrement de données sismiques est ajouté au fichier de temps de tir ; l'enregistrement de données sismiques comprend un numéro de tir, un nom de fichier sismique actuel et un numéro de point d'un point de données sismiques actuel ;
dans un mode d'enregistrement ininterrompu, le centre de commande d'exploitation (2) est en outre configuré pour faire en sorte que les flûtes sismiques (6) soient toujours dans un état d'acquisition et un état de téléversement, et le centre de commande d'exploitation (2) est en outre configuré pour organiser toutes les données sismiques reçues et stocker les données sismiques selon une durée prédéfinie ; à l'instant d'excitation de source, le centre de commande d'exploitation (2) est en outre configuré pour émettre un signal de déclenchement vers une source d'impulsions à haute tension pour l'excitation de la source, et en même temps, un enregistrement de données sismiques est ajouté au fichier de temps de tir ;
afin d'obtenir un enregistrement précis du nombre de points d'échantillonnage à l'instant d'excitation, le FPGA de l'OCC est configuré pour recevoir des données sismiques multicanaux téléversées par une unité de transfert de données, écrire un bit indicateur d'excitation pour chaque point de données et envoyer le bit indicateur d'excitation à l'ARM pour l'arrangement et l'empaquetage ; le FPGA est en outre configuré pour calculer un instant d'excitation de tir selon le résultat d'analyse de l'ARM en tant qu'information de vitesse, et émettre un signal de déclenchement à l'instant de tir correspondant pour commander l'excitation de la source sismique remorquée en profondeur et marquer un bit de position pour l'excitation d'un point de données sismiques actuel ; l'instant de tir étant l'instant du tir d'excitation de la source sismique ;
dans un mode d'acquisition ininterrompu, l'ARM est configuré pour vérifier le bit indicateur d'excitation du point de données ; lorsque le bit indicateur est détecté comme étant « 1 », le numéro de point de données actuel est écrit dans le fichier de temps de tir afin de réaliser un enregistrement précis du numéro de point de données à l'instant d'excitation.

2. Dispositif pour l'enregistrement ininterrompu de données sismiques multicanaux selon la revendication 1, dans lequel l'émetteur-récepteur à fibres optiques (8) est configuré pour la conversion entre des données pour réseau gigabit et des données pour fibres optiques.

3. Dispositif pour l'enregistrement ininterrompu de données sismiques multicanaux selon la revendication 1, dans lequel le commutateur réseau (10) est un commutateur gigabit ; et le commutateur gigabit est configuré pour l'extension d'une porte de réseau de l'émetteur-récepteur à fibres optiques (8).

4. Procédé pour l'enregistrement ininterrompu de données sismiques multicanaux, **caractérisé en ce que** le procédé d'enregistrement est appliqué à un dispositif pour l'enregistrement ininterrompu de données sismiques multicanaux, qui comprend une plateforme de commande terminale (1), un centre de commande d'exploitation (2), une alimentation en tension stabilisée (3), un module de puissance réducteur de tension (4), une source sismique (5), des flûtes sismiques (6) et un réseau d'émission (7) ; le centre de commande d'exploitation (2) comprend un émetteur-récepteur à fibres optiques (8), un système sur puce (9), un commutateur réseau (10), un serveur série (14), un module de commande de disque dur (11), un disque dur (12) et un module d'interface (13) ; l'émetteur-récepteur à fibres optiques (8) est connecté respectivement au commutateur réseau (10), au serveur série (14) et au système sur puce (9) ; le commutateur réseau (10) est en outre connecté au module de commande de disque dur (11) ; le commutateur de réseau (10) est en outre connecté au module de commande du disque dur (11) ; le module de commande de disque dur (11) est configuré pour commander la lecture et l'écriture par le disque dur (12) ; le disque dur (12) est configuré pour stocker des données sismiques et un fichier de temps de tir ; le module d'interface (13) est respectivement connecté au système sur puce (9) et à la flûte sismique (6) ; la plateforme de commande terminale (1) est respectivement connectée à l'émetteur-récepteur à fibres optiques (8) et au module de puissance réducteur de tension (4) par l'intermédiaire d'une boîte de distribution sous-marine ; le module de puissance réducteur de tension (4) est en outre connecté à l'alimentation en tension stabilisée (3) et à la source sismique (5) ; l'alimentation en tension stabilisée (3) est configurée pour fournir de l'énergie au centre de commande d'exploitation (2) ; la source sismique (5) est respectivement connectée au commutateur réseau (10), au système sur puce (9) et au réseau d'émission (7) ; le système sur puce (9) est une unité de commande centrale du centre de commande d'exploitation (2) ; le processeur ARM est configuré pour mettre en paquets des données sismiques multicanaux, analyser des données de positionnement afin de déterminer des informations de vitesse et enregistrer un fichier de temps de tir ; et le FPGA est configuré pour recevoir des données sismiques sur la flûte sismique (6) et pour recevoir les données de positionnement transmises par la plateforme de commande terminale (1) afin de générer un signal de déclenchement de tir ; les données de positionnement étant envoyées à l'ARM pour analyse ; et
le procédé d'enregistrement comprend :
acquérir des données sismiques multicanaux et des données de positionnement ; chaque canal des données sismiques comprenant une pluralité de points de données sismiques ;
analyser les données de positionnement pour déterminer des informations de vitesse ;
déterminer un instant de tir en fonction des informations de vitesse ; et
déterminer un point de données sismiques actuel de l'instant de tir en fonction du point de données sismiques et de l'instant de tir, et ajouter un enregistrement de données sismiques à un fichier de temps de tir ;
l'enregistrement de données sismiques comprend un numéro de tir, un nom de fichier sismique actuel et un numéro de point du point de données sismiques actuel ;
déterminer un point de données sismiques actuel de l'instant de tir en fonction du point de données sismiques et de l'instant de tir, et l'ajout d'un enregistrement de données sismiques à un fichier de temps de tir comprennent en particulier :
définir à « 0 » un bit indicateur d'excitation de chacun des points de données sismiques ;
lorsque l'instant de déclenchement est atteint, émettre un signal d'impulsion de déclenchement logique transistor-transistor (TTL) et mettre à « 1 » le bit indicateur d'excitation du point de données sismiques atteignant l'instant de déclenchement ;
déterminer si le bit indicateur d'excitation du point de données sismiques est « 1 » afin d'obtenir un premier résultat d'évaluation ; et
si le premier résultat d'évaluation indique que le bit indicateur d'excitation du point de données sismiques est « 1 », déterminer le point de données sismiques actuel de l'instant de tir et ajouter un enregistrement de données sismiques au fichier de temps de tir.

5. Procédé pour l'enregistrement ininterrompu de données sismiques multicanaux selon la revendication 4, dans lequel, après la détermination d'un point de données sismiques actuel de l'instant de tir en fonction du point de données sismiques et de l'instant de tir, et l'ajout d'un enregistrement de données sismiques à un fichier de temps de tir, le procédé comprend en outre :
arranger et empaqueter les données sismiques par un processeur aléatoire du système sur puce (9) pour déterminer les données sismiques empaquetées ; et
saisir les données sismiques empaquetées dans le commutateur réseau (10), et saisir les données sismiques empaquetées dans le disque dur (12) par le commutateur réseau (10) via le module de contrôle de disque dur (11).
